# EUROPÄISCHE PATENTSCHRIFT

(11) **EP 4 364 038 B1**
(45) Veröffentlichungstag und Bekanntmachung des Hinweises auf die Patenterteilung: **19.11.2025**
(21) Anmeldenummer: 22725161.8
(22) Anmeldetag: 28.04.2022
(51) Int. Cl.: G06K 19/077

(54) **IDENTIFIKATIONSELEMENT FÜR MEDIENFÜHRUNGEN**
IDENTIFICATION ELEMENT FOR MEDIA LINES
ÉLÉMENT D'IDENTIFICATION POUR LIGNES MULTIMÉDIA

(30) Priorität: 29.06.2021 DE 102021206712
(43) Veröffentlichungstag der Anmeldung: 08.05.2024
(73) Patentinhaber: ContiTech Deutschland GmbH, 30175 Hannover (DE)
(72) Erfinder: LINZMAIER, Markus, 30165 Hannover (DE); BORCHERT, Lukas, 30165 Hannover (DE); REUTTER, Kilian, 30165 Hannover (DE); ZIPF, Thomas, 30165 Hannover (DE)
(74) Vertreter: Preusser, Andrea
(86) Internationale Anmeldenummer: PCT/DE2022/200081
(87) Internationale Veröffentlichungsnummer: WO 2023/274456

(56) Entgegenhaltungen:
- EP-A1- 2 765 537
- IT-A1- RM20 100 146

## Beschreibung

Die vorliegende Erfindung betrifft ein Identifikationselement gemäß dem Oberbegriff des Patentanspruchs 1, ein Identifikationselement gemäß dem Oberbegriff des Patentanspruchs 5 sowie eine Medienführung mit einem derartigen Identifikationselement gemäß dem Patentanspruch 10.

Zum Transport bzw. zur Führung von Medien wie insbesondere von Fluiden ist die Verwendung von Medienführungen bzw. von Medienleitungen beispielsweise in Form von Rohren bzw. Schläuchen bekannt. Zu den Fluiden gehören neben Flüssigkeiten auch Gase oder pastöse Stoffe. Mehrere Rohre bzw. Schläuche können dabei untereinander über Rohrkupplungen bzw. Schlauchkupplungen miteinander verbunden werden, welche jeweils an dem entsprechenden offenen Ende fest an dem jeweiligen Rohr bzw. Schlauch angeordnet sind. Über derartige Rohrkupplungen bzw. Schlauchkupplungen können Rohre bzw. Schläuche ebenfalls mit Aggregaten verbunden werden, welche ihrerseits eine entsprechende Kupplung aufweisen. Rohre werden dabei aufgrund der verwendeten Marialien, beispielsweise Metall oder Kunststoff, als vergleichsweise steife, starre bzw. unflexible Medienleitungen angesehen, wohingegen Schläuche aufgrund ihres relativ einfache bzw. deutlich biegsamen Materials, beispielsweise Elastomer, flexible Medienleitungen darstellen.

Es ist bekannt, derartige Medienleitungen mit elektronischen Identifikationselementen zu versehen. Dies kann beispielsweise der eindeutigen Identifikation einer einzelnen Medienleitung während der Produktion aber auch bei der Verwendung dienen. Dies kann beispielsweise für die eindeutige Zuordnung während der Montage bzw. bei der Verwendung nützlich sein, um eine bestimmte Medienleitung von anderen gleichen Medienleitungen unterscheiden zu können. Dies kann auch der Wartung während der Verwendung dienen. Auch kann dies mit weiteren Möglichkeiten wie beispielsweise der Zuordnung einer Verschleißstelle, einer Beschädigung und dergleichen verwendet werden.

Als derartige elektronische Identifikationselemente können beispielsweise Transponder verwendet werden, welche von außen mittels eines elektromagnetischen Feldes aktiviert, d.h. zum Senden von gespeicherten Informationen, angeregt und ggfs. hierdurch auch gleichzeitig mit der zum Senden erforderlichen elektrischen Energie versorgt werden können. Es können auf diese Art und Weise auch Informationen auf dem Transponder geändert bzw. gespeichert werden. Ein derartiger Transponder kann beispielsweise ein RFID-Chip (radio-frequency identification) sein.

Die WO 2015/044451 A1 betrifft ein Rohr bzw. einen Schlauch mit einem Etikett. Das Etikett umfasst Rohrservicedaten und mindestens ein weiteres Datenelement aus der folgenden Gruppe von Daten: Rohridentifikationsdaten, Rohrherstellungsdaten und Rohrbetriebsdaten. Das Etikett ermöglicht es, die Daten elektronisch zu lesen, zu schreiben und zu aktualisieren. Das Etikett liefert Daten für die Wartung des Rohres bzw. des Schlauches. Ein Verfahren zur Wartung eines solchen Rohres bzw. eines solchen Schlauches kann wie folgt erfolgen: Bereitstellen des Etiketts an dem Rohr bzw. an dem Schlauch; elektronisches Lesen der Daten von dem Etikett zur Wartung des Rohres bzw. des Schlauches; Wartung des Rohres bzw. des Schlauches gemäß den gelesenen Daten; und elektronisches Schreiben der Daten in das Etikett, um zumindest die Daten der Rohrwartung bzw. der Schlauchwartung zu aktualisieren.

Hierzu können derartige Transponder als separate elektronische Bauteile bzw. Baugruppen, beispielsweise als RFID-Chips, samt entsprechender Antenne in einer Lage bzw. zwischen die Lagen eines Rohres bzw. eines Schlauches eingebettet werden. Auch können derartige Transponder samt entsprechender Antenne an Garnen bzw. in Garne oder dergleichen vorgesehen und samt der Garne zum Beispiel in gewobene Festigkeitsträgerschichten in Rohre bzw. in Schläuche eingebracht werden.

Nachteilig hierbei ist, dass die Transponder hierdurch bereits bei der Herstellung in die Medienleitung bzw. in die Medienführung eingearbeitet werden, was den Aufwand der Herstellung der Medienführung erhöhen kann. Insbesondere kann die Positionierung des Transponders nicht vorbestimmt werden, da diese davon abhängt, an welcher Stelle des Garns sich der Transponder befindet und wo in der Medienführung dieser Abschnitt des Garns verarbeitet wird. Auch können auf diese Art und Weise Transponder lediglich in die Festigkeitsträger von Medienführungen und insbesondere von Schläuchen eingearbeitet werden, d.h. nicht in festigkeitsträgerlose Schläuche bzw. Rohre sowie nicht in Rohr- oder Schlauchkupplungen, welche eher einstückig bzw. integral als Metall oder aus Kunststoff, ggfs. als Spritzgussteile, hergestellt werden.

Die IT RM20 100 146 A1 beschreibt eine Hochfrequenzvorrichtung mit mindestens einer Antenne, die ganz oder teilweise aus leitfähigen Legierungen mit Formgedächtnis besteht.

Die EP 2 765 537 A1 beschreibt eine Vorrichtung zur Identifizierung eines zu identifizierenden Objekts mit länglicher Form, wobei die Vorrichtung mindestens einen Radiofrequenzmarker umfasst, der mit einem Lesegerät durch Austausch von Radiofrequenzen zwischen ihnen zusammenwirkt, wobei der Radiofrequenzmarker mit Mitteln zur Befestigung an dem zu identifizierenden Objekt versehen ist, wobei die Befestigungsmittel durch ein flexibles Substrat gebildet werden, das ein Formgedächtnis hat.

Eine Aufgabe der vorliegenden Erfindung ist es, ein Identifikationselement für Medienführungen der eingangs beschriebenen Art bereit zu stellen, welches einfacher, schneller, kostengünstiger, positionsgenauer und bzw. oder flexibler verwendet werden kann als bisher bekannt. Insbesondere soll das Identifikationselement nachträglich, d.h. nach der Herstellung, bei Medienführungen verwendet bzw. nachgerüstet werden können. Insbesondere soll das Identifikationselement auch bei Medienführungen in Form von Rohr- bzw. Schlauchkupplungen verwendet werden können. Insbesondere soll das Identifikationselement bei Medienführungen unterschiedlicher Kontur und bzw. oder unterschiedlicher Durchmesser verwendet werden können. Zumindest soll eine Alternative zu bekannten derartigen Identifikationselementen für Medienführungen geschaffen werden.

Die Aufgabe wird erfindungsgemäß durch ein Identifikationselement mit den Merkmalen gemäß Patentanspruch 1, durch ein Identifikationselement mit den Merkmalen gemäß Patentanspruch 5 sowie durch eine Medienführung mit den Merkmalen gemäß Patentanspruch 10 gelöst. Vorteilhafte Weiterbildungen sind in den Unteransprüchen beschrieben.

Somit betrifft die vorliegende Erfindung ein Identifikationselement für Medienführungen mit wenigstens einem Transponder und mit wenigstens einer ersten Antenne, welche signalübertragend mit dem Transponder verbunden ist und sich im Wesentlichen von dem Transponder weg erstreckt.

Das erfindungsgemäße Identifikationselement ist dadurch gekennzeichnet, dass die erste Antenne zumindest abschnittsweise eine Formgedächtnislegierung und bzw. oder ein Formgedächtnispolymer aufweist. Mit anderen Worten weist das Material der ersten Antenne zumindest in einem Abschnitt entlang der länglichen Erstreckungsrichtung der ersten Antenne die Eigenschaften einer Formgedächtnislegierung wie beispielsweise Nitinol und bzw. oder ein Formgedächtnispolymer auf. Unter einer Formgedächtnislegierung wird eine metallische Legierung verstanden, welche abhängig von der Temperatur in zwei unterschiedlichen Kristallstrukturen existieren und somit in Abhängigkeit ihrer Temperatur ihre Form verändern können. Unter einem Formgedächtnispolymer wird ein entsprechender Kunststoff verstanden. Die erste Antenne kann zusätzlich ein weiteres Material aufweisen, welches die Sende- und Empfangseigenschaften der ersten Antenne besser umsetzen kann als die Formgedächtnislegierung und bzw. oder das Formgedächtnispolymer. Die erste Antenne kann jedoch auch vollständig aus dem Material der Formgedächtnislegierung und bzw. oder des Formgedächtnispolymers bestehen.

Der vorliegenden Erfindung liegt dabei die Erkenntnis zugrunde, dass die temperaturabhängige Formveränderung der ersten Antenne der erfindungsgemäßen Identifikationselement dazu verwendet werden kann, das Identifikationselement in einem vergleichsweise kalten und losen Zustand, insbesondere in einer geradlinigen oder leicht gebogenen Erstreckung, auf die Außenseite einer Wand einer Medienführung aufzulegen und sich durch die vergleichsweise hohe Temperatur des Mediums, welches durch die Medienführung strömt und somit auch dessen Wand erwärmt, sich derart erwärmen und hierdurch zusammenziehen zu lassen, dass auf diese Art und Weise ein ausreichend fester wenigstens formschlüssiger und ggfs. zusätzlich kraftschlüssiger Sitz des Identifikationselements auf der Medienführung, insbesondere in einer ringförmigen, spiralförmigen oder helixförmigen Erstreckung, bewirkt werden kann, um das Identifikationselement währen der Verwendung bzw. während des Betriebs der Medienführung dort zu halten.

Auf diese Art und Weise kann ein Identifikationselement bzw. können mehrere Identifikationselemente nachträglich sowie einfach, schnell und ohne Hilfsmittel bzw. ohne Werkzeuge an beliebigen vorbestimmten Stellen der Medienführung angebracht werden. Die Medienführung selbst muss hierzu nicht verändert werden. Auch können die Identifikationselemente von außen optisch auf ihre Anwesenheit kontrolliert werden. Ferner können die Identifikationselemente ggfs. ausgetauscht werden, beispielsweise bei Beschädigungen. Insbesondere können die Identifikationselemente sowohl auf Rohre und Schläuche als auch auf Rohr- und Schlauchkupplungen als Medienführungen aufgebracht werden. Insbesondere können derartige Identifikationselemente bei unterschiedlichen Konturen und bzw. oder Durchmessern von Medienführungen verwendet werden.

Gemäß einem Aspekt der Erfindung weist das Identifikationselement wenigstens eine zweite Antenne auf, welche signalübertragend mit dem Transponder verbunden ist und sich im Wesentlichen, der ersten Antenne gegenüberliegend, von dem Transponder weg erstreckt, wobei die zweite Antenne zumindest abschnittsweise eine Formgedächtnislegierung und bzw. oder ein Formgedächtnispolymer aufweist. Hierdurch kann die Medienführung aus Sicht des Transponders des Identifikationselements zweiseitig umgriffen werden, was den Halt auf der Außenseite der Wand der Medienführung verbessern kann.

Gemäß einem weiteren Aspekt der Erfindung besteht die erste Antenne, vorzugsweise ferner die zweite Antenne, aus der Formgedächtnislegierung und bzw. oder dem Formgedächtnispolymer. Dies kann die Umsetzung vereinfachen, da keine weiteren Materialien verwendet werden müssen.

Erfindungsgemäß ist die Formgedächtnislegierung und bzw. oder das Formgedächtnispolymer der ersten Antenne, vorzugsweise ferner der zweiten Antenne, ausgebildet, sich bei einer Temperaturerhöhung ringförmig, spiralförmig oder helixförmig zu verengen. Dies kann die Umsetzung der zuvor beschriebenen Eigenschaften und Vorteile begünstigen bzw. eine konkrete Form der Umsetzung darstellen.

Gemäß einem weiteren Aspekt der Erfindung ist die Formgedächtnislegierung und bzw. oder das Formgedächtnispolymer der ersten Antenne, vorzugsweise ferner der zweiten Antenne, ausgebildet, bei einer ersten, niedrigeren Temperatur eine geradlinige oder gebogene Form aufzuweisen und bei einer zweiten, höheren Temperatur eine ringförmige, spiralförmige oder helixförmige Form aufzuweisen. Dies kann die Umsetzung der zuvor beschriebenen Eigenschaften und Vorteile begünstigen bzw. eine konkrete Form der Umsetzung darstellen.

Die vorliegende Erfindung betrifft auch ein Identifikationselement für Medienführungen mit wenigstens einem Transponder, mit wenigstens einer ersten Antenne, welche signalübertragend mit dem Transponder verbunden ist, und mit wenigstens einem ersten Halterungselement, welches sich im Wesentlichen von dem Transponder weg erstreckt. Das Identifikationselement ist dadurch gekennzeichnet, dass das erste Halterungselement zumindest abschnittsweise eine Formgedächtnislegierung und bzw. oder ein Formgedächtnispolymer aufweist.

Auf diese Art und Weise können die zuvor beschriebenen Eigenschaften und Vorteile des zuvor betrachteten erfindungsgemäßen Identifikationselements mittels einer separaten Antenne und eines separaten ersten Halterungselements umgesetzt werden. Hierdurch können Antenne und erstes Halterungselement jeweils auf ihren Zweck gezielt bzw. besser ausgelegt werden, als dies bei der zuvor beschriebenen Umsetzung beider Eigenschaften seitens der Antenne möglich ist.

Gemäß einem Aspekt der Erfindung weist das Identifikationselement wenigstens ein zweites Halterungselement auf, welches sich im Wesentlichen, dem ersten Halterungselement gegenüberliegend, von dem Transponder weg erstreckt, wobei das zweite Halterungselement zumindest abschnittsweise eine Formgedächtnislegierung und bzw. oder ein Formgedächtnispolymer aufweist. Hierdurch können die entsprechenden Eigenschaften und Vorteile des zuvor beschriebenen Identifikationselements auch in diesem Fall umgesetzt werden.

Gemäß einem weiteren Aspekt der Erfindung besteht das erste Halterungselement, vorzugsweise ferner das zweite Halterungselement, aus der Formgedächtnislegierung und bzw. oder dem Formgedächtnispolymer. Hierdurch können die entsprechenden Eigenschaften und Vorteile des zuvor beschriebenen Identifikationselements auch in diesem Fall umgesetzt werden.

Erfindungsgemäß ist die Formgedächtnislegierung und bzw. oder das Formgedächtnispolymer des ersten Halterungselements, vorzugsweise ferner des zweiten Halterungselements, ausgebildet, sich bei einer Temperaturerhöhung ringförmig, spiralförmig oder helixförmig zu verengen. Hierdurch können die entsprechenden Eigenschaften und Vorteile des zuvor beschriebenen Identifikationselements auch in diesem Fall umgesetzt werden.

Gemäß einem weiteren Aspekt der Erfindung ist die Formgedächtnislegierung und bzw. oder das Formgedächtnispolymer des ersten Halterungselements, vorzugsweise ferner des zweiten Halterungselements, ausgebildet, bei einer ersten, niedrigeren Temperatur eine geradlinige oder gebogene Form aufzuweisen und bei einer zweiten, höheren Temperatur eine ringförmige, spiralförmige oder helixförmige Form aufzuweisen. Hierdurch können die entsprechenden Eigenschaften und Vorteile des zuvor beschriebenen Identifikationselements auch in diesem Fall umgesetzt werden.

Gemäß einem weiteren Aspekt der Erfindung ist der Transponder ein RFID-Chip. Hierdurch können die Eigenschaften und Vorteile eines RFID-Transponders bzw. eines RFID-Chips bei den beiden erfindungsgemäßen Identifikationselementen umgesetzt und genutzt werden.

Die vorliegende Erfindung betrifft auch eine Medienführung, vorzugsweise ein Rohr, einen Schlauch, eine Rohrkupplung oder eine Schlauchkupplung, mit einer zumindest abschnittsweise zylindrischen Wand und mit wenigstens einem Identifikationselement wie jeweils zuvor beschrieben, welches wenigstens formschlüssig auf der Außenseite der Wand gehalten wird. Hierdurch kann jedes der beiden erfindungsgemäßen Identifikationselemente bei einer derartigen Medienführung angewendet werden, so dass die entsprechenden Eigenschaften und Vorteile dort umgesetzt und genutzt werden können.

Gemäß einem Aspekt der Erfindung ist die Medienführung wenigstens abschnittsweise dort, wo das Identifikationselement gehalten wird, rotationssymmetrisch ausgebildet. Dies kann den Halt des entsprechenden Identifikationselements begünstigen.

Ein Ausführungsbeispiel und weitere Vorteile der Erfindung werden nachstehend im Zusammenhang mit den folgenden Figuren erläutert. Darin zeigt:
Fig. 1 eine perspektivische schematische Darstellung eines erfindungsgemäßen Identifikationselements;
Fig. 2 eine perspektivische schematische Darstellung einer erfindungsgemäßen Medienführung in Form eines Schlauches mit dem erfindungsgemäßen Identifikationselement; und
Fig. 3 eine perspektivische schematische Darstellung einer erfindungsgemäßen Medienführung in Form einer Kupplung mit dem erfindungsgemäßen Identifikationselement.

Die Beschreibung der o.g. Figuren erfolgt in zylindrischen Koordinaten mit einer Längsrichtung X, einer zur Längsrichtung X senkrecht ausgerichteten radialen Richtung R sowie einer um die Längsrichtung X umlaufenden Umfangsrichtung U.

Die Längsrichtung X, die radiale Richtung R und die Umfangsrichtung U können gemeinsam auch als Raumrichtungen X, R, U bzw. als zylindrische Raumrichtungen X, R, U bezeichnet werden.

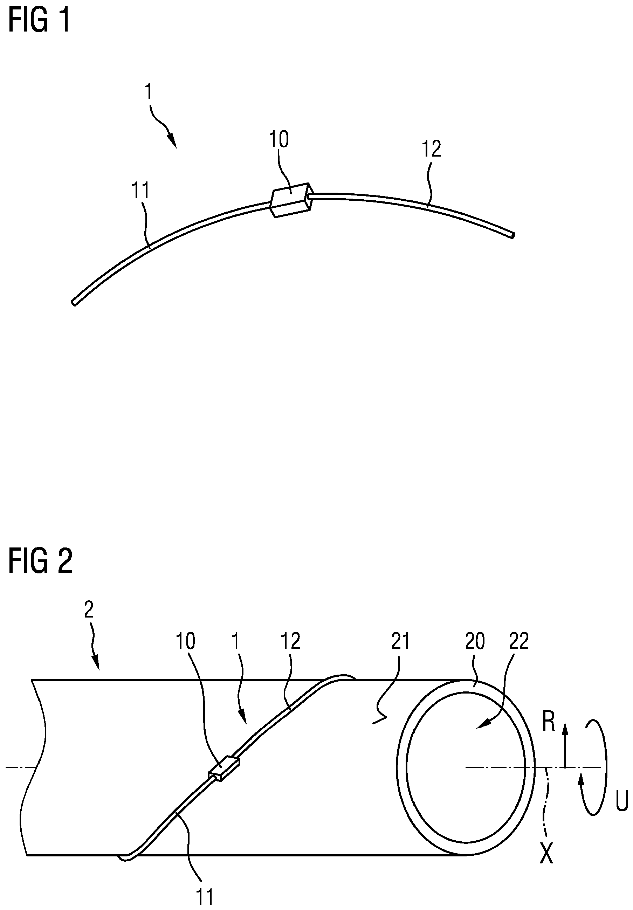

Ein erfindungsgemäßes Identifikationselement 1, wie in der Figur 1 einzeln dargestellt, besteht aus einem Transponder 10 in Form eines RFID-Chips 10, von dem sich eine erste längliche Antenne 11 und in der gegenüberliegenden Richtung eine zweite längliche Antenne 12 weg erstrecken. Beide Antennen 11, 12 bestehen jeweils über ihre gesamte Erstreckung aus einer Formgedächtnislegierung, welche bei Erwärmung ihre Form verändert.

Bei einer ersten, vergleichsweise niedrigen Temperatur im Bereich von ca. 20°C weisen die beiden Antennen 11, 12 eine leicht gebogene Form auf, so dass das Identifikationselement 1 insgesamt bogenförmig geformt ist, siehe Figur 1. Alternativ könnten die beiden Antennen 11, 12 in diesem Zustand eine sich geradlinig erstreckende Form aufweisen (nicht dargestellt).

Bei Erwärmung auf eine zweite, vergleichsweise hohe Temperatur von über ca. 30°C bis maximal ca. 60°C gehen die Formgedächtnislegierungen der beiden Antennen 11, 12 in eine deutlich gebogenere bzw. helixförmig zusammengerollte Form über, welche in der Umfangsrichtung U deutlich über 180° zusammengerollt ist, siehe Figur 2. Insbesondere überlappen sich die äußeren Spitzen der beiden Antennen 11, 12 in der Umfangsrichtung U, so dass die erwärmten Antennen 11, 12 sich in der Umfangsrichtung U um über 360° schließen.

Wird nun das erfindungsgemäße Identifikationselement 1 bei der ersten, vergleichsweise niedrigen Temperatur auf eine Außenseite 21 bzw. auf eine Außenfläche 21 einer Wand 20 einer Medienführung 2, beispielsweise in Form eines Rohres 2 oder eines Schlauches 2, aufgesetzt, siehe Figur 2, so ist dies aufgrund der lediglich leicht gebogenen Form möglich.

Wird das erfindungsgemäße Identifikationselement 1 nun erwärmt, was insbesondere durch ein warmes Fluid erfolgen kann, welches durch eine Durchgangsöffnung 22 bzw. durch eine Durchstromöffnung 22 des Rohres 2 bzw. des Schlauches 2 strömen kann, so ziehen sich die beiden Antennen 11, 12 wie zuvor beschrieben derartig zusammen, dass die Medienführung 2 helixförmig umgriffen und somit das erfindungsgemäße Identifikationselement 1 selbsttätig auf der Außenseite 21 der Wand 20 des Rohres 2 bzw. des Schlauches 2 gehalten wird, siehe Figur 2.

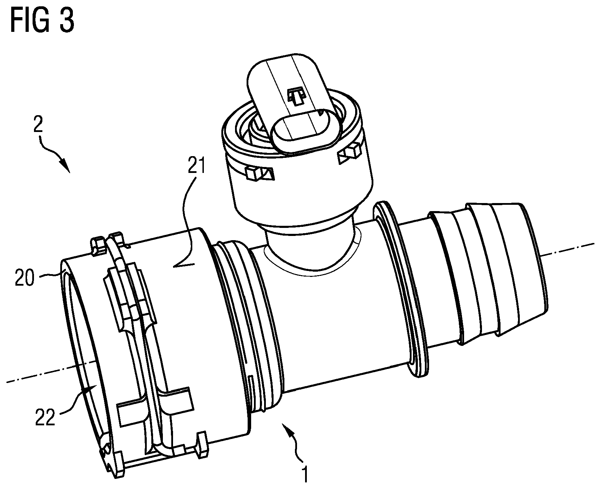

Auf die gleiche Art und Weise kann das erfindungsgemäße Identifikationselement 1 auf eine Medienführung 2 in Form einer Rohrkupplung 2 oder einer Schlauchkupplung 2, siehe Figur 3, aufgesetzt und dort ringförmig gehalten werden.

### Bezugszeichenliste

- R: radiale Richtung
- U: Umfangsrichtung
- X: Längsrichtung

- 1: Identifikationselement
- 10: Transponder; RFID-Chip
- 11: erste Antenne; erstes Halterungselement
- 12: zweite Antenne; zweites Halterungselement

- 2: Medienführung; Rohr; Schlauch; Rohrkupplung; Schlauchkupplung
- 20: Wand
- 21: Außenseite; Außenfläche
- 22: Durchgangsöffnung; Durchstromöffnung

## Patentansprüche

1. Identifikationselement (1) für Medienführungen (2)
mit wenigstens einem Transponder (10), und
mit wenigstens einer ersten Antenne (11), welche signalübertragend mit dem Transponder (10) verbunden ist und sich im Wesentlichen von dem Transponder (10) weg erstreckt,
wobei die erste Antenne (11) zumindest abschnittsweise eine Formgedächtnislegierung und/oder ein Formgedächtnispolymer aufweist,
**dadurch gekennzeichnet, dass**
die Formgedächtnislegierung und/oder das Formgedächtnispolymer der ersten Antenne (11), vorzugsweise ferner der zweiten Antenne (12), ausgebildet ist, sich bei einer Temperaturerhöhung ringförmig, spiralförmig oder helixförmig zu verengen.

2. Identifikationselement (1) nach Anspruch 1, **gekennzeichnet durch**
wenigstens eine zweite Antenne (12), welche signalübertragend mit dem Transponder (10) verbunden ist und sich im Wesentlichen, der ersten Antenne (11) gegenüberliegend, von dem Transponder (10) weg erstreckt,
wobei die zweite Antenne (12) zumindest abschnittsweise eine Formgedächtnislegierung und/oder ein Formgedächtnispolymer aufweist.

3. Identifikationselement (1) nach Anspruch 1 oder 2, **dadurch gekennzeichnet, dass**
die erste Antenne (11), vorzugsweise ferner die zweite Antenne (12), aus der Formgedächtnislegierung und/oder das Formgedächtnispolymer besteht.

4. Identifikationselement (1) nach einem der vorangehenden Ansprüche, **dadurch gekennzeichnet, dass**
die Formgedächtnislegierung und/oder das Formgedächtnispolymer der ersten Antenne (11), vorzugsweise ferner der zweiten Antenne (12), ausgebildet ist,
• bei einer ersten, niedrigeren Temperatur eine geradlinige oder gebogene Form aufzuweisen und
• bei einer zweiten, höheren Temperatur eine ringförmige, spiralförmige oder helixförmige Form aufzuweisen.

5. Identifikationselement (1) für Medienführungen (2)
mit wenigstens einem Transponder (10),
mit wenigstens einer ersten Antenne, welche signalübertragend mit dem Transponder (10) verbunden ist, und
mit wenigstens einem ersten Halterungselement (11), welches sich im Wesentlichen von dem Transponder (10) weg erstreckt,
wobei das erste Halterungselement (11) zumindest abschnittsweise eine Formgedächtnislegierung und/oder ein Formgedächtnispolymer aufweist,
**dadurch gekennzeichnet, dass**
die Formgedächtnislegierung und/oder das Formgedächtnispolymer des ersten Halterungselements (11), vorzugsweise ferner des zweiten Halterungselements (12), ausgebildet ist, sich bei einer Temperaturerhöhung ringförmig, spiralförmig oder helixförmig zu verengen.

6. Identifikationselement (1) nach Anspruch 5, **gekennzeichnet durch**
wenigstens ein zweites Halterungselement (12), welches sich im Wesentlichen, dem ersten Halterungselement (11) gegenüberliegend, von dem Transponder (10) weg erstreckt,
wobei das zweite Halterungselement (12) zumindest abschnittsweise eine Formgedächtnislegierung und/oder ein Formgedächtnispolymer aufweist.

7. Identifikationselement (1) nach Anspruch 5 oder 6, **dadurch gekennzeichnet, dass**
das erste Halterungselement (11), vorzugsweise ferner das zweite Halterungselement (12), aus der Formgedächtnislegierung und/oder das Formgedächtnispolymer besteht.

8. Identifikationselement (1) nach einem der Ansprüche 5 bis 7, **dadurch**
**gekennzeichnet, dass**
die Formgedächtnislegierung und/oder das Formgedächtnispolymer des ersten Halterungselements (11), vorzugsweise ferner des zweiten Halterungselements (12), ausgebildet ist,
• bei einer ersten, niedrigeren Temperatur eine geradlinige oder gebogene Form aufzuweisen und
• bei einer zweiten, höheren Temperatur eine ringförmige, spiralförmige oder helixförmige Form aufzuweisen.

9. Identifikationselement (1) nach einem der vorangehenden Ansprüche, **dadurch**
**gekennzeichnet, dass**
der Transponder (10) ein RFID-Chip (10) ist.

10. Medienführung (2), vorzugsweise Rohr (2), Schlauch (2), Rohrkupplung (2) oder Schlauchkupplung (2),
mit einer zumindest abschnittsweise zylindrischen Wand (20) und
mit wenigstens einem Identifikationselement (1) nach einem der vorangehenden Ansprüche, welches wenigstens formschlüssig auf der Außenseite (21) der Wand (20) gehalten wird.

11. Medienführung (2) nach Anspruch 10, **dadurch gekennzeichnet, dass** die Medienführung (2) wenigstens abschnittsweise dort, wo das Identifikationselement (1) gehalten wird, rotationssymmetrisch ausgebildet ist.

## Claims

1. Identification element (1) for media tours (2)
with at least one transponder (10), and
with at least one first antenna (11), which is connected to the transponder (10) for signal transmission and extends substantially away from the transponder (10), wherein the first antenna (11) has, at least in sections, a shape memory alloy and/or a shape memory polymer,
**characterized by** the fact that
the shape memory alloy and/or the shape memory polymer of the first antenna (11), preferably also of the second antenna (12), is formed to narrow in an annular, spiral or helix shape when the temperature increases.

2. Identification element (1) according to claim 1, **characterized by**
at least one second antenna (12), which is connected to the transponder (10) for sign al transmission purposes and extends substantially away from the transponder (10) opposite the first antenna (11),
wherein the second antenna (12) has a shape memory alloy and/or a shape memory polymer at least in sections.

3. Identification element (1) according to claim 1 or 2, **characterized in that**
the first antenna (11), preferably the second antenna (12), consists of the shape memory alloy and/or the shape memory polymer.

4. Identification element (1) according to any of the preceding claims, **characterized in that**
the shape memory alloy and/or the shape memory polymer of the first antenna (11), preferably also of the second antenna (12), is formed,
• have a straight or curved shape at a first, lower temperature, and
• at a second, higher temperature, have a ring-shaped, spiral-shaped or helix-shaped shape.

5. Identification element (1) for media tours (2)
with at least one transponder (10),
with at least one first antenna, which is connected to the transponder (10) for signal transmission, and
with at least one first bracket element (11), which extends substantially away from the transponder (10),
wherein the first bracket member (11) has at least a shape memory alloy and/or a shape memory polymer in sections,
**characterized by** the fact that
the shape memory alloy and/or the shape memory polymer of the first support element (11), preferably also of the second support element (12), is formed to narrow in a ring, spiral or helix shape when the temperature increases.

6. Identification element (1) according to claim 5, **characterized by**
at least one second bracket member (12), which essentially extends away from the transponder (10) opposite the first bracket member (11),
wherein the second bracket member (12) has at least in sections a shape memory alloy and/or a shape memory polymer.

7. Identification element (1) according to claim 5 or 6, **characterized in that**
the first bracket member (11), preferably the second bracket member (12), consists of the shape memory alloy and/or the shape memory polymer.

8. Identification element (1) according to any one of claims 5 to 7, **characterized in that**
the shape memory alloy and/or the shape memory polymer of the first bracket member (11), preferably also of the second bracket member (12), is formed,
• have a straight or curved shape at a first, lower temperature, and
• at a second, higher temperature, have a ring-shaped, spiral-shaped or helix-shaped shape.

9. Identification element (1) according to any of the preceding claims, **characterized in that**
the transponder (10) is an RFID chip (10).

10. Media guide (2), preferably pipe (2), hose (2), pipe coupling (2) or hose coupling (2),
with a cylindrical wall (20) at least in sections and
having at least one identification element (1) according to one of the preceding claims, which is held at least form-fitting on the outside (21) of the wall (20).

11. Media management (2) according to claim 10, **characterized in that**
the media guide (2) is rotationally symmetrical, at least in sections, where the identification element (1) is held.

## Revendications

1. Élément d'identification (1) pour les visites médiatiques (2)
avec au moins un transpondeur (10), et
avec au moins une première antenne (11), qui est connectée au transpondeur (10) pour la transmission du signal et s'étend sensiblement à l'écart du répéteur (10), dans lequel la première antenne (11) possède, au moins en sections, un alliage à mémoire de forme et/ou un polymère à mémoire de forme,
**caractérisée par le fait que**
L'alliage à mémoire de forme et/ou le polymère à mémoire de forme de la première antenne (11), de préférence également de la seconde antenne (12), est formé pour se rétrécir en forme d'annulaire, de spirale ou d'hélice lorsque la température augmente.

2. Élément d'identification (1) selon la revendication 1, **caractérisé par**
au moins une seconde antenne (12), qui est connectée au répéteur (10) à des fins de transmission de signal et s'étend sensiblement à l'écart du répéteur (10) en face de la première antenne (11),
dans laquelle la deuxième antenne (12) a un alliage à mémoire de forme et/ou un polymère à mémoire de forme au moins en sections.

3. Élément d'identification (1) selon la revendication 1 ou 2, **caractérisé en ce que** La première antenne (11), de préférence la seconde antenne (12), est constituée de l'alliage à mémoire de forme et/ou du polymère à mémoire de forme.

4. Élément d'identification (1) selon l'une quelconque des revendications précédente s, **caractérisé en ce que**
l'alliage à mémoire de forme et/ou le polymère à mémoire de forme de la première antenne (11), de préférence également de la seconde antenne (12), est formé,
• avoir une forme droite ou incurvée à une première température plus basse, et
• À une seconde température plus élevée, avoir une forme en forme d'anneau, de spirale ou d'hélice.

5. Élément d'identification (1) pour les visites médiatiques (2)
avec au moins un transpondeur (10),
avec au moins une première antenne, qui est connectée au transpondeur (10) pour la transmission du signal, et
avec au moins un premier élément de support (11), qui s'étend sensiblement à l'écart du transpondeur (10),
dans lequel le premier élément de support (11) a au moins un alliage à mémoire de forme et/ou un polymère à mémoire de forme en sections,
**caractérisée par le fait que**
L'alliage à mémoire de forme et/ou le polymère à mémoire de forme du premier élément de support (11), de préférence également du deuxième élément de support (12), sont formés pour se rétrécir en forme d'anneau, de spirale ou d'hélice lorsque la température augmente.

6. Elément d'identification (1) selon la revendication 5, **caractérisé par**
au moins un second élément de support (12), qui s'étend essentiellement à partir du transpondeur (10) en face du premier élément de support (11),
dans lequel le deuxième élément de support (12) comporte au moins en sections un alliage à mémoire de forme et/ou un polymère à mémoire de forme.

7. Élément d'identification (1) selon la revendication 5 ou 6, **caractérisé en ce que** Le premier élément de support (11), de préférence le deuxième élément de support (12), est constitué de l'alliage à mémoire de forme et/ou du polymère à mémoire de forme.

8. Elément d'identification (1) selon l'une quelconque des revendications 5 à 7, **caractérisé en ce que**
l'alliage à mémoire de forme et/ou le polymère à mémoire de forme du premier élément de support (11), de préférence également du deuxième élément de support (12), est formé,
• avoir une forme droite ou incurvée à une première température plus basse, et
• À une seconde température plus élevée, avoir une forme en forme d'anneau, de spirale ou d'hélice.

9. Elément d'identification (1) selon l'une quelconque des revendications précédente s, **caractérisé en ce que**
le transpondeur (10) est une puce RFID (10).

10. Guide de média (2), de préférence tuyau (2), tuyau (2), raccord de tuyau (2) ou raccord de tuyau (2),
à paroi cylindrique (20) d'au moins en sections et
comportant au moins un élément d'identification (1) selon l'une des revendications précédentes, qui est maintenu au moins ajusté à l'extérieur (21) de la paroi (20).

11. Gestion des supports (2) selon la revendication 10, **caractérisée en ce que** Le guide de support (2) est symétrique en rotation, au moins en sections, où l'élément d'identification (1) est maintenu.
